# EUROPEAN PATENT APPLICATION

(11) **EP 0 935 068 A2**
(43) Date of publication of application: **11.08.1999**
(21) Application number: 98121643.5
(22) Date of filing: 12.11.1998
(51) Int. Cl.: F03B 17/06, F03D 1/04, F03B 13/08

(54) **Device to funnel fluid flow into a turbine**

(30) Priority: 04.02.1998 IT UD980010
(71) Applicant: Grassmann, Hans, 34100 Duino Aurisina (TS) (IT)
(72) Inventor: Grassmann, Hans, 34100 Duino Aurisina (TS) (IT)
(74) Representative: Petraz, Gilberto Luigi

(57) **Abstract**

System to extract energy from a flow of fluid by means of a rotor or propeller (11) connected to means to use and/or transform the energy to another energy form, the rotor or propeller (11) being associated with conveyor means (21) to define a conduit (12) through which the fluid flows, the system providing a reduction in section of the passage of the flow of fluid in the conduit (12) from a value (D1) in correspondence with the inlet into the conduit (12), to a value (D2)<(D1) in correspondence or proximity with the position of the rotor or propeller (11), and a rapid increase in the section of passage immediately downstream of the rotor or propeller (11) from the value (D2) to a value (D3)>(D2), the reduction in section upstream of the rotor or propeller (11) entailing the concentration of a large section of flow in a reduced section, the rapid increase in the section of passage in the area downstream of the rotor or propeller (11) entailing an increase in the impact section of the fluid in transit, with a corresponding reduction in the speed.

## Description

### FIELD OF THE INVENTION

This invention concerns a system to extract energy from a flow of fluid, and the relative device, as set forth in the respective main claims.

The invention is applied to produce energy and allows to exploit, in an improved manner compared with conventional systems, the kinetic energy of a flow of fluid in movement, such as air, water or otherwise, which kinetic energy can then be transformed into another desired type of energy.

### BACKGROUND OF THE INVENTION

At present there is a growing tendency to develop alternative systems to generate energy with a higher productivity than in conventional systems, both because of difficulties in finding the raw materials and also to limit environmental pollution.

Among these alternative systems we should consider those systems which exploit the kinetic energy possessed by a flow of moving fluid, such as air or water, to drive a rotary device with blades, or suchlike, whose mechanical energy is exploited or transformed into another form of energy.

The main advantage of alternative systems which exploit the kinetic energy of a fluid, whether they be systems which exploit the energy of the wind or water, is that they use inexhaustible energy sources, they do not pollute and they do not introduce any supplementary thermal loads into the environment.

At the present time, however, these systems have a number of disadvantages.

Conventional systems extract the kinetic energy primarily from the air, and less from water.

Those which exploit the kinetic energy of water (not to be confused with those which exploit the potential energy of water, as is the case with dams), form only a small fraction of the overall exploitation of kinetic energy.

Usually, these systems operate with an axis of rotation perpendicular to the direction of flow of the water.

For this reason, the description of the state of the art refers mainly to conventional wind systems which generally have their axis of rotation parallel with the direction of the wind.

Conventional systems of this type extract energy only from a limited impact section of the moving fluid, smaller than the front surface covered by the rotary device, or rotor.

This means that, in order to produce high power the rotor has to be correspondingly large, at least in terms of front surface.

The flow of air, or water, which can be exploited is not equal to the surface of the rotor, but smaller inasmuch as the flow widens as it passes through the zone of the rotors. This happens because the total flow has to be preserved, that is, the product of the speed and impact section has to remain constant upstream and downstream of the rotor.

It has been calculated that a conventional rotor exploits the kinetic energy of the fluid equivalent to that contained in a section equal to 60% of the surface of the rotor, for a given speed of the flow. As the fluid passes into the peripheral part of the propeller it causes a further reduction in the efficiency of the system so that the overall yield, without considering further losses because of kinematisms, is about 50%.

The need to use large size rotors in order to obtain high power entails a plurality of disadvantages. In the first place, the great weight of the rotors and the considerable pressure of the wind on the system make it necessary to have a resistant, costly, heavy structure which is not very functional.

Large size rotors rotate slowly; the transformation of this slow rotation into a fast rotation for the generation of electricity causes inefficiency and low yields due to the high forces applied.

A further disadvantage is that conventional large scale systems have to have very strong foundation structures so as to guarantee the absolute stability of the system; this means that these systems cannot be transported by ships or floating platforms inasmuch as the rolling motion would damage the structure and compromise the functionality thereof.

The techniques used for building conventional wind mills (with an axis of rotation parallel to the direction of flow) allows them to be installed only in the air, and not, for example, in water so that they can exploit the currents of the sea.

Documents US-A-4.684.316, US-A-4.482.290, US-A-4.450.364 and US-A-4.075.500 describe systems to exploit wind energy which have tried to improve the energy yield by trying to lower the pressure of the air downstream of the propeller.

For example, documents US-A-4.482.290 and US-A-4.075.500 teach to provide a conical conduit around the propeller which widens immediately downstream of the said propeller.

US-A-4.684.316 provides to assemble a structure upstream of the propeller with the same purpose of lowering the air pressure downstream of the propeller.

The systems described in these documents are not able to obtain the desired result inasmuch as, in actual fact, due to their very structure, they are not able to lower the pressure of flow inside the conduit.

Only the structure described in US-A-4.075.500 can, in theory, cause a lowering of the pressure inside the conduit, but in fact this only happens if there is no propeller; when the propeller is present the flow is slowed down, and the only lowering of pressure which occurs is due to the action of the propeller which, by removing energy, lowers the air pressure; but this is not caused by the conduit.

Moreover these systems do not take into account the friction and turbulence which are generated as the flow of air passes through the structure, and consequently they do not have aerodynamic structures which are suitable to minimise said friction and turbulence.

This entails both an effective loss in the energy yield and also an obstacle to the correct passage of the flow.

Moreover, some of the structures proposed include obstacles in front of the propeller which, in practice, reduce the section of real flow which can be used to extract energy.

Furthermore, systems known to the art do not include a rapid and aerodynamic widening of the conduit downstream of the propeller, which means that the air cannot lower its speed equally quickly, and without creating turbulence and friction.

All those systems which are known to the art also include a conventional structure to support the propeller, with the addition of the conduit which surrounds it, which entails large dimensions and also the use of very heavy materials.

This structure therefore needs extremely resistant supporting means and very strong foundations, consequently it entails high costs and difficulties in installation.

The present Applicant has designed this invention to overcome these shortcomings and to obtain further advantages.

### SUMMARY OF THE INVENTION

This invention is set forth and characterised in the respective main claims, while the dependent claims describe variants of the idea of the main embodiment.

The purpose of the invention is to provide an improved system to exploit the kinetic energy from a moving flow of fluid.

This purpose is achieved by reducing the size of the propellers of the energy-generating devices, which allows to lighten the bearing structures, simplify the kinematisms and therefore to reduce the overall costs of the device while at the same time increasing the efficiency thereof.

Moreover, the efficiency is increased also by using an aerodynamic structure which allows to reduce to a minimum the turbulence and friction of the flow.

The structure moreover has no obstacle in front of the propeller which might disturb the flow of the fluid and in any way reduce the section from which the propeller can extract energy.

A further purpose is to allow the devices to be used to exploit the kinetic energy of any fluid whatsoever whether air or liquid, such as a water course and the sea.

A further purpose is to exploit flows of fluid at low speed such as at present cannot be exploited by conventional systems for energy generation.

The system has in common with conventional systems that the energy is extracted from a moving fluid, taking the fluid from a pressure p1 to a pressure p2, where p1 is greater then p2. This can be achieved, for example, with a propeller or rotor inserted in a flow of fluid. Immediately in front of the propeller the pressure will be greater than immediately after the propeller.

The invention provides to vary the impact section of a passing fluid from an initial value, that at which it enters the device, to a final value, that at which it emerges from the device; this variation entails a corresponding variation in the speed of the fluid.

This variation occurs with a first reduction in the impact section followed by an increase in the impact section.

According to the invention, the propeller is located at the point where the impact section substantially reaches its lowest value, or a value which in any case is lower than the initial value at which it enters the conduit.

Upstream of the propeller, the impact section becomes progressively narrower, so that the flow of fluid is concentrated in a smaller section.

With the increase in speed caused by the reduction in the impact section there is a corresponding increase in kinetic energy, correlated to a corresponding reduction in pressure (principle of energy conservation in fluids).

As it passes the propeller the fluid loses energy, which entails a further reduction in the pressure.

As the fluid passes through the propeller, or immediately after the propeller, the impact section widens rapidly, which causes the speed of the fluid to decrease and the pressure increases correspondingly rapidly.

The structure of the conduit, at least in its part downstream of the propeller, is aerodynamic in form, so as to limit to a minimum the friction and turbulence on the flow of air in the area where it emerges from the conduit.

At the outlet of the device, the fluid has a pressure substantially equal to its pressure at inlet, but a lower speed due to the loss of that part of energy removed by the propeller.

The impact section exploited by the device, at the inlet of the device, is much greater than the front surface of the blades, which is the opposite of what happens in conventional systems.

Moreover, by widening arbitrarily the impact section downstream of the propeller it is possible to obtain a corresponding increase in the kinetic energy which the device can exploit.

Conventional systems remove the energy from the rotor using the shaft at the center thereof (to which an electric energy generator, for example, may be connected). This invention does not require a central rotor shaft and the rotor may be suspended from the inner surface of the apparatus, allowing to extract energy from the periphery of the rotor instead of from the center.

According to one embodiment, the variation in the impact section is always gradual and progressive;

According to an advantageous and preferential variant, the variation in the impact section is in steps, at least downstream of the propeller.

According to a variant, the conduit defining the variations in the impact section of the flow of fluid has at the side at least a channel connected with the outside of the device, through which fluid enters from the outside due to depression and can be used in association with a propeller arranged outside the device.

According to a variant, the walls of the conduit defining the variations in the impact section have an aerodynamic conformation so that they reduce as much as possible the turbulence and losses due to friction.

According to a variant of the invention, the main conduit inside which the propeller is inserted cooperates with one or more auxiliary conduits, arranged downstream and with a larger diameter than the main conduit; the function of the auxiliary conduits is to lower the pressure in the area downstream of the main conduit, thus exerting an effect of removing the flow of air from the said main conduit.

### BRIEF DESCRIPTION OF THE DRAWINGS

The attached Figures are given as a non-restrictive example and show some preferential embodiments of the invention as follows:
Fig. 1 is a side view, in diagram form, of a known propeller device to generate energy;
Figs. 2a-2c show partly, in longitudinal section, three embodiments of the invention;
Fig. 3a shows partly, in longitudinal section, a preferential embodiment of the invention;
Fig. 3b shows a variant of Fig. 3a;
Fig. 4a shows a variant of Fig. 3b;
Figs. 4b, 4c, 4d, 4e and 4f show evolved variants of Fig. 4a;
Fig. 5 shows a variant of Fig. 3a;
Fig. 6 shows in plane and diagram form an application on land;
Figs. 7 and 8 are side views, in diagram form, of two applications in water.

### DETAILED DESCRIPTION OF THE PREFERRED EMBODIMENT

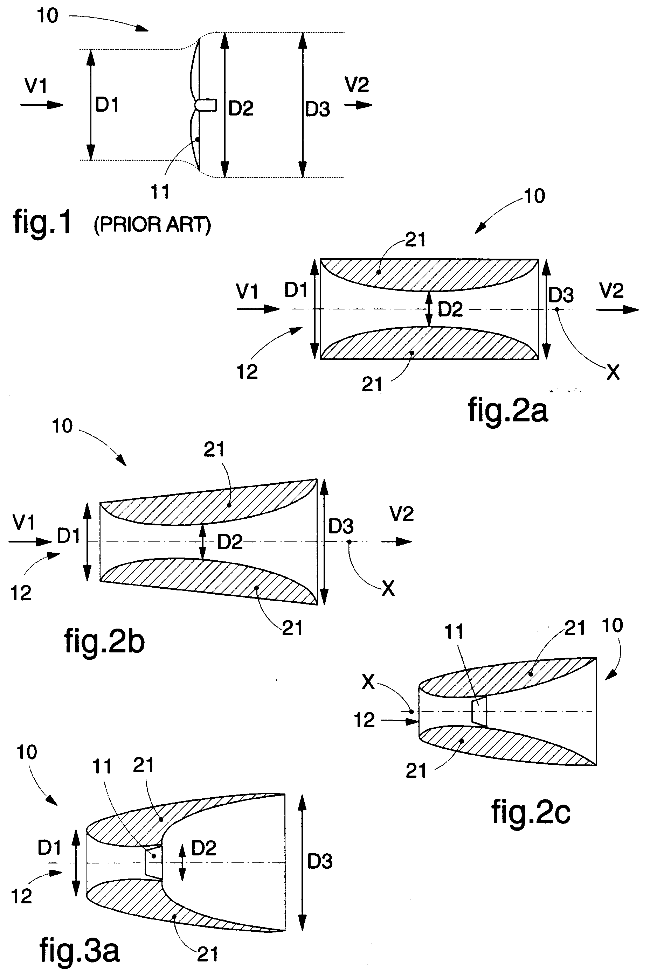

Fig. 1 is a side view, in diagram form, of a propeller 11 employed in a conventional device to generate energy; the propeller 11 decelerates the flow of fluid which hits it and takes it from an initial speed V1 to a final speed V2. The impact section of the fluid, shown with a line of dashes, is increased during the passage through the propeller 11: the fluid upstream of the propeller 11 has an impact section D1 smaller than the impact section D2 of the propeller 11. D3 indicates the impact section assumed by the fluid downstream of the propeller 11; in systems known to the art there is therefore a progressive increase in the impact section of the fluid so that the product of the speed/impact section remains substantially constant.

Since D1 is less than D2 and since V2 cannot become too low so as not to interrupt the flow of fluid, a propeller 11 of this type can therefore extract a quantity of kinetic energy of the fluid equivalent to that contained in a section equal to 60% of the surface of the propeller, in this case 0.6xD2, for a given speed of flow.

For this reason, in order to obtain high power, very big and resistant propellers 11 are required.

In order to overcome these shortcomings, the invention provides first to reduce the impact section of the fluid from a value D1 to a value D2 and then to increase it to a value D3, where D2<D1<D3.

In correspondence, or in proximity, with the minimum value D2 a propeller 11 is positioned which, compared with conventional systems, and with the same impact section D1, has a much smaller diameter.

The system according to the invention is embodied in a device 10 defined by a conveyor element 21, symmetrical with respect to the axis x through which the fluid passes. The device 10 defines a conduit 12 through which the fluid passes and which has the said controlled variation in section.

In the conduit 12 shown in Fig. 2a, without a propeller 11, the flow enters with an impact section D1 and a speed V1. Along the conduit 12 the fluid increases its speed inversely proportionate to the impact section until it reaches a maximum value in correspondence with the value D2. When it leaves the conduit 12, the fluid has an impact section D3 equal to D1 and a speed V2 substantially equal to V1.

The embodiment shown in Fig. 2 shows a theoretical case for the purposes of illustration. A flow of fluid with section D1 and speed V1 can emerge from the apparatus only with the same section (D1=D3) and the same speed (V1=V2) on the assumption that there is no energy loss inside the apparatus.

In a real situation all the losses in kinetic energy which occur in the apparatus have to be taken into consideration.

The conduit 12 shown in Fig. 2b has a larger final impact section D3 than the case shown in Fig. 2a, with the same inlet impact section D1.

In this case, an incoming flow with a section D1 and speed V1 can be maintained even if inside the apparatus there are energy losses, inasmuch as the outlet speed V2 can be reduced thanks to the increase in section D3.

The ratio D3/D1 therefore determines the fraction of energy which can be exploited by the system; the greater this ratio is, the greater is the energy which can be exploited. Widening the outlet section arbitrarily makes available to the system a greater fraction of kinetic energy which can be exploited by inserting a propeller 11 in correspondence with the intermediate section.

In this case, however, the flow may be impeded by turbulence which can limit the exploitation of the kinetic energy available.

In the embodiment shown in Fig. 2c the inner walls of the element 21, for this reason, are aerodynamic in form so as to reduce to a minimum the losses of kinetic energy due to friction and turbulence.

In the preferential embodiment shown in Fig. 3a, the widening downstream of the propeller 11 is in steps and defined by a profile with a concave development; this further increases the yield of the device 10.

This embodiment is particularly suitable because almost all the loss of kinetic energy of the flow of fluid occurs in the propeller 11 and therefore it is not distributed over the whole surface as happens, for example, in the wing of an aeroplane.

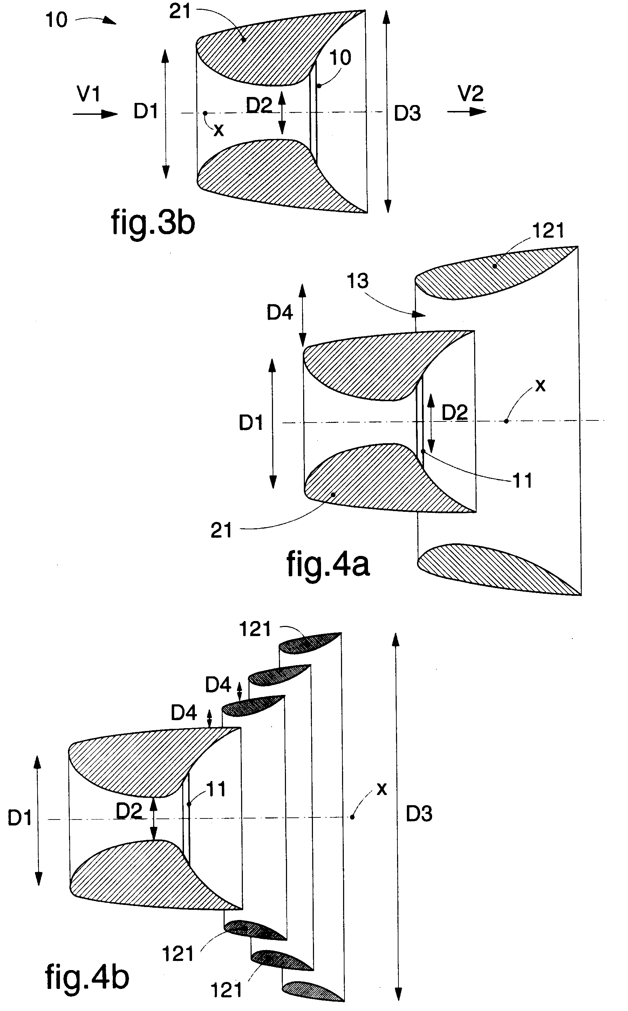

Fig. 3b shows a variant of Fig. 3a wherein the conduit defined by the elements 21 downstream of the propeller 11 has a reduced length in order to reduce the weight and overall cost of the structure.

Also in this case the widening of the conduit 12 downstream of the propeller 11 is concave.

Apart from the advantage of using smaller propellers 11, which are therefore lighter and more economical, the invention also allows to use less resistant materials, for example plastic.

According to a variant, these materials are at least partly transparent so as to reduce their impact on the surrounding environment.

According to another variant, these materials are colored or camouflaged so that they blend in with the surrounding environment.

In another embodiment of the invention, several conduits are combined in succession, one after the other, so that the conduit located downstream is suitable to lower the pressure of the flow emerging from the conduit upstream, thus determining a kind of removal effect, to extract the flow from the first conduit.

This configuration with multiple conduits also allows to use conduits with a smaller dimension than in the case of the single conduit which, with the same quantity of energy produced, further reduces the turbulence and therefore the loss of efficiency.

In the variant shown in Fig. 4a, for example, outside the conduit 12 there is a supplementary channel 13 with a wider section, defined by a conveyor element 121.

The increase in efficiency is given, not only by the reduction in turbulence, but also by the fact that the section of flow from which energy is extracted, in this case, is equal to D1 plus D4 times 2.

The double conduit configuration achieves an embodiment wherein, in substance, inside a first conduit with the geometric characteristics as described above, instead of the propeller, a second conduit is inserted and the propeller is inserted inside this second conduit.

With this configuration it is possible to use, with the same quantity of energy produced, propellers of even smaller diameter, with all the advantages described above.

Fig. 4b shows a variant which includes a large number of supplementary channels 13, with a relative increase in the section which can be used to exploit energy; this increase is equal to the sum of the inlet sections to every channel 13.

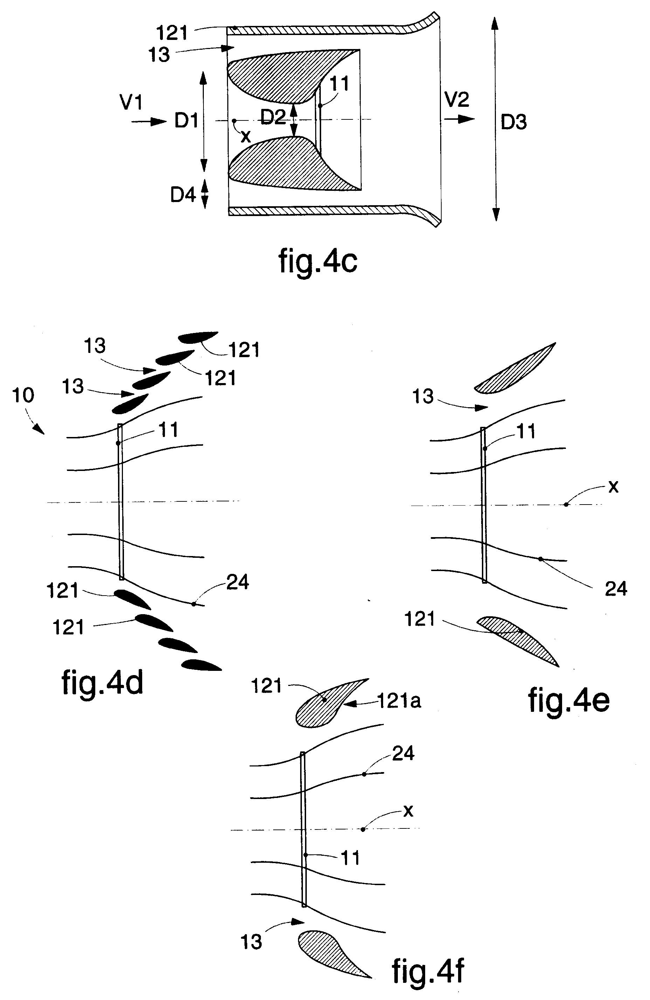

Fig. 4c shows a more simplified and therefore more economical embodiment, wherein the supplementary channel 13 is defined by a substantially rectilinear conveyor element 121.

Fig. 4d shows a variant of Fig. 4b wherein the main conduit 12 has been eliminated and the propeller 11 is associated with a plurality of conveyor elements 121 substantially coaxial to the propeller 11 and arranged in succession, which create respective supplementary channels or conduits 13 with a diameter greater than the diameter of the propeller 11.

The function of these channels 13 is to lower the pressure of the air, indicated by the lines 24, downstream of the propeller 11.

The number of channels 13 used depends on the size and the cost pre-determined for the device 10.

Fig. 4e shows the variant of Fig. 4d wherein there is only one supplementary channel 13 in cooperation with the propeller 11.

Fig. 4f shows a further variant wherein the conveyor element 21 which defines the supplementary channel 13 has an inner profile 121a which is partly concave in shape so as to improve the aerodynamics of the system.

In figures 4d, 4e and 4f the diameter of the channel 13, or of the channels 13, is larger than the propeller 11, so that the air which has passed through the propeller 11 and also the air which did not pass through the propeller 11 enters the channel 13.

With respect to the air which did not pass the propeller 11, the channel 13 has the same function as in Fig. 3: air 24 with a large impact section gets concentrated in to a smaller impact section and afterwards expands again into a large impact section.

One can see that this is the case when one takes into account the widening in impact section of the air 24 which has passed the propeller 11, as indicated in figures 4d, 4e and 4f.

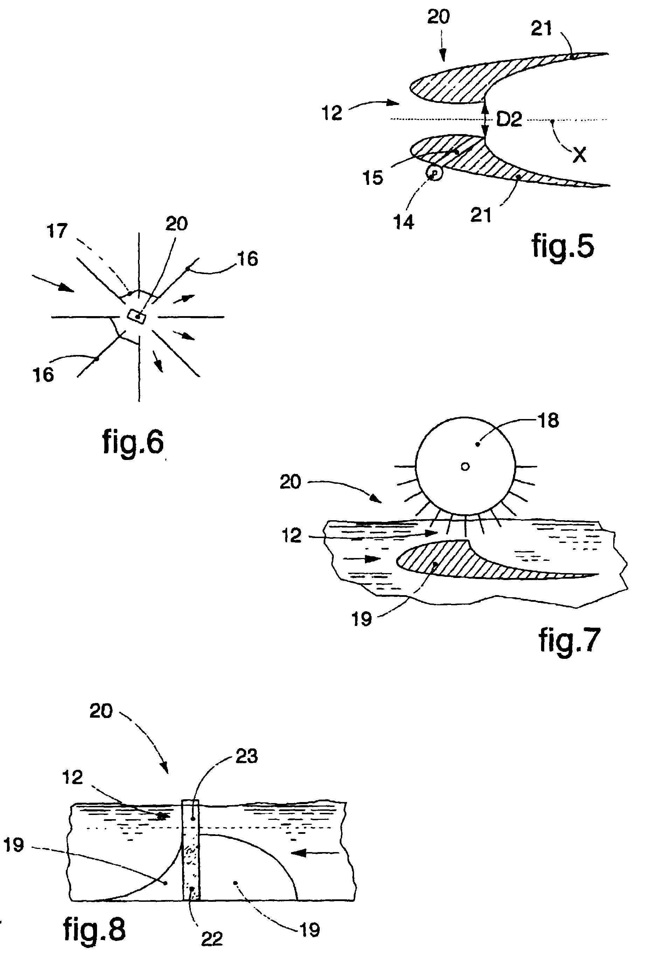

In the variant shown in Fig. 5, an outer rotor 14 is used, for example a turbine or similar, associated with the end of a radial conduit 15, which puts the conduit 12, and particularly the area of the intermediate impact section D2, in communication with the outside environment.

As it passes through the conduit 12 the fluid creates a depression in the radial conduit 15 which causes the outer rotor 14 to rotate.

According to a variant, the conduit 12 is associated, above or below, with a rotatable structure and has its own positioning means which allow it to automatically position itself in the direction of advance of the wind, thus allowing to exploit the kinetic energy of the wind to the maximum. In the variant shown in Fig. 6 the conduit 12 is located in the center of a group of walls 16 arranged like spokes.

In this case, in correspondence with each peak as defined by the walls 16 there is a removable closing panel 17 which allows to define, on each occasion according to the direction of the wind, the preferential apertures for the inlet/outlet of the wind.

According to another variant which is not shown here, the conduit 12 cooperates at least at inlet with adjustable deflector means suitable to choke the entering fluid in a desired manner.

Given its strength and lightness, the device can also be installed on board water craft, such as boats or platforms, both to eliminate the environmental impact, since these water craft can be taken out to the open sea, and also to better exploit favourable conditions of strong wind, and also to allow automatic positioning, in that the water craft is secured by an anchor.

In one embodiment of the invention, the conduit 12 with the propeller 11 can be installed at a great height from the ground, to exploit the increase in the speed of the wind which is found at greater heights.

According to a variant, the conduit 12, or the plurality of conduits 12, 13 arranged one behind the other, can be filled with a light gas, for example helium or hydrogen, or can be kept suspended from a suitable structure.

According to a variant, the device according to the invention is associated with a platform consisting of floating tanks inside which hydrogen and/or oxygen is stored, produced by decomposing the water by a process of electrolysis with the energy produced by the device according to the invention.

The hydrogen and oxygen can be exploited in various ways in energy generating systems.

The invention, in its forms as described above and shown in Figs. 2-5, can be used both for water and for air.

For example, in order to exploit the current produced by the tides, the structure shown in Figs. 3a, 3b, 4a and 4b can be immersed in the sea.

Fig. 7 shows another application of the device according to the invention using water as the fluid, for example river water.

In this case a wheel with blades 18 is used on the surface of the water and an element 19 of the aerodynamic kind which causes the impact section first to narrow and then to widen; the wheel with blades 18 is substantially located in the area of maximum reduction of the impact section of the flow of fluid.

Another way to exploit the kinetic energy of a river is shown in Fig. 8; the kinetic energy of the moving water is exploited by raising the level of the water with a barrier 22 defining an aperture 23 at the upper part. The water level upstream and downstream of the barrier 23 is the same, therefore this system does not use the potential energy of the water due to variations in the level, as in traditional systems.

If a propeller 11 is positioned in the aperture 23, the water passing through it with a reduced impact section is decelerated and the widening of section downstream of the barrier 22 allows a loss of kinetic energy which can be exploited by the device. According to a variant, the bed is excavated downstream of the barrier 22 so as to increase the section of the water flow.

Elements 19 to convey the flow of water, upstream and downstream of the barrier 22, improve the productivity of the system, reducing the vortexes and turbulence created by the presence of the barrier 22.

## Claims

1. System to extract energy from a flow of fluid, either air or water, by means of a rotor or propeller (11) connected to means to use and/or transform the energy to another energy form, the rotor or propeller (11) being associated with conveyor means (21) to define a conduit (12) through which the fluid flows, the system being characterised in that it provides a reduction in the section of passage of the flow of fluid in the conduit (12) from a value (D1) in correspondence with the inlet into the conduit (12), to a value (D2)<(D1) in correspondence or proximity with the position of the rotor or propeller (11), and a rapid increase in this section of passage immediately downstream of the rotor or propeller (11) from the value (D2) to a value (D3)>(D2), the passage of the flow between the inlet to the conduit (12) and the propeller (11) being free from any obstacle, the reduction in section upstream of the rotor or propeller (11) entailing the concentration of a large section of flow in a reduced section, the rapid increase in the section of passage in the zone downstream of the rotor or propeller (11) entailing an increase in the impact section of the fluid in transit, with a corresponding reduction in the speed.

2. System as in Claim 1, characterised in that the variation in the impact section is gradual and progressive.

3. System as in Claim 1, characterised in that the variation in the impact section is in steps at least in the transition from the narrow impact section to the wider impact section and has an aerodynamic shape with a concave profile so as to minimise any disturbance to the flow of fluid.

4. Device to extract energy from a flow of fluid, either air or water, by means of a rotor or propeller (11) connected to means to use and/or transform the energy to another energy form, the rotor or propeller (11) being associated with conveyor means (21) to define a conduit (12) through which the fluid flows, the device being characterised in that the conduit (12) defines an inlet section with a value (D1), an outlet section with a value (D3) greater than (D1) and an intermediate section with a value (D2) less than the inlet value (D1), the rotor or propeller (11) being located substantially in correspondence or in proximity with the intermediate section (D2), the value of (D1) being included between (D2) and (D3).

5. Device as in Claim 4, characterised in that the conduit (12) through which the fluid flows is shaped so as to widen in steps with a concave and aerodynamic profile immediately downstream of and in proximity with the propeller (11).

6. Device as in Claim 4 or 5, characterised in that it comprises two or more conduits (12) with an increasing width at inlet, arranged in sequence, at least the first conduit (12) including a propeller (11) located inside in correspondence or in proximity with the section of minimum width.

7. Device as in Claim 4, wherein the rotor or propeller (11) is not located in the intermediate section, characterised in that on the conveyor element (21) there is at least an aperture defining a conduit (15) through which fluid enters from outside due to depression, the conduit (15) being associated, in a position outside the conduit, (12) to a rotor or propeller (14).

8. Device as in any claim from 4 to 7 inclusive, characterised in that the conduit (12) is associated with a rotatable structure and includes its own positioning means to position itself in the direction of advance of the fluid.

9. Device as in any claim from 4 to 8 inclusive, characterised in that the conduit (12) is defined by an aperture (23) made in a barrier (22) located in the bed of a river and pre-arranged to raise the level of the river at least in the area around the barrier (22).

10. Device as in any claim from 4 to 8 inclusive, characterised in that the conduit (12) is defined by an aperture (23) made in a barrier (22) located in the bed of a river and downstream of which the river bed has been excavated to increase the section of the flow of water.

11. Device as in any claim from 4 to 10 inclusive, characterised in that the conduit (12) is included at the center of a group of walls (16) arranged like spokes, on at least some of the peaks of the walls there being temporary closing panels (17) suitable to define preferential apertures for the inlet/outlet of the fluid.

12. Device as in any claim from 4 to 11 inclusive, characterised in that the conduit (12) cooperates on the outside with a supplementary channel (13) suitably shaped so as to create in the rear part of the conduit (12) a low pressure area.

13. Device as in any claim from 4 to 12 inclusive, characterised in that it is positioned at a great height from the ground so as to exploit the increase in wind speed at greater heights.

14. Device to extract energy from a flow of fluid, either air or water, by means of a rotor or propeller (11) connected to means to use and/or transform the energy to another energy form, the rotor or propeller (11) being associated with conveyor means (21) substantially coaxial to the propeller (11), characterised in that the conveyor means (121) define one or more conveyor channels (13) with a diameter greater than the diameter of the propeller (11) and arranged in correspondence with or downstream of the propeller (11), the conveyor means (121) entailing a lowering of pressure of the fluid downstream of the propeller (11).

15. Device as in Claim 14, characterised in that it includes a plurality of said conveyor elements (121) with a progressively increasing diameter and arranged in succession to each other.
